# FASCICULE DE BREVET EUROPEEN

(11) **EP 4 078 146 B1**
(45) Date de publication et mention de la délivrance du brevet: **25.03.2026**
(21) Numéro de dépôt: 20824259.4
(22) Date de dépôt: 16.12.2020
(51) Int. Cl.: G01N 21/35, G01N 21/3563

(54) **DISPOSITIF D'IMAGERIE MULTI-SPECTRALE INFRAROUGE SANS LENTILLE ET SON PROCÉDÉ DE FABRICATION**
LINSENLOSE MULTI-SPEKTRALE INFRAROT-BILDERFASSUNGSVORRICHTUNG UND HERSTELLUNGSVERFAHREN DAFÜR
LENSLESS MULTI-SPECTRAL INFRARED IMAGING DEVICE AND FABRICATION METHOD THEREOF

(30) Priorité: 19.12.2019 FR 1914926
(43) Date de publication de la demande: 26.10.2022
(73) Titulaire: Commissariat à l'Energie Atomique et aux Energies Alternatives, 75015 Paris (FR)
(72) Inventeur: DUPOY, Mathieu, 38054 GRENOBLE CEDEX 9 (FR); LORENT, Emerick, 38054 GRENOBLE CEDEX 9 (FR)
(74) Mandataire: Hautier IP
(86) Numéro de dépôt international: PCT/EP2020/086546
(87) Numéro de publication internationale: WO 2021/122833

(56) Documents cités:
- EP-A1- 2 657 793
- EP-A1- 3 502 666
- WO-A1-2015/167492
- WO-A1-2018/015517
- US-A1- 2007 296 688
- US-A1- 2014 125 642
- LIU DEXING ET AL: "Lensless Infrared Image Processing Method Based on Fresnel Aperture", 2019 44TH INTERNATIONAL CONFERENCE ON INFRARED, MILLIMETER, AND TERAHERTZ WAVES (IRMMW-THZ), IEEE, September 2019 (2019-09-01), pages 1 - 2, XP033636783, DOI: 10.1109/IRMMW-THZ.2019.8873965
- EVAN L ERICKSON ET AL: "Miniature lensless computational infrared imager", ELECTRONIC IMAGING, vol. 2016, no. 12, 14 February 2016 (2016-02-14), pages 1 - 4, XP055710005, ISSN: 2470-1173, DOI: 10.2352/ISSN.2470-1173.2016.12.IMSE-269

## Description

### DOMAINE TECHNIQUE

La présente invention concerne le domaine de l'imagerie optique infrarouge sans lentille. Elle trouvera pour application particulièrement avantageuse, mais non limitative, l'imagerie de tissus biologiques.

### ÉTAT DE LA TECHNIQUE

Dans de nombreux domaines d'application comme l'agro-alimentaire, la médecine et le contrôle sanitaire, la détection et l'identification de composés chimiques ou biochimiques sont nécessaires dans le but de détecter une contamination ou encore de réaliser un diagnostic. La spectrométrie infrarouge (IR) est une technique analytique extrêmement répandue pour détecter et identifier de tels composés chimiques ou biochimiques.

Afin de réaliser une image d'un échantillon à analyser, une solution connue consiste à cartographier l'échantillon via un microscope associé à une source IR polychromatique et un spectromètre IR à transformée de Fourier (FTIR). Un tel système permet de scanner l'échantillon et d'obtenir des images multi-spectrales de résolution spatiale d'environ 10 µm. Un inconvénient de ce type de solution est que l'analyse d'une surface d'échantillon de quelques mm² ou quelques cm² est longue. Le champ de vue de l'échantillon à imager est dès lors limité. Un tel système est en outre complexe, cher et encombrant.

L'émergence des lasers à cascade quantique QCL (acronyme de « Quantum Cascade Laser » selon la terminologie anglo-saxonne) permet de réaliser une pluralité de sources IR monochromatiques, couvrant le domaine spectral des sources IR polychromatiques. Dès lors, il n'est plus nécessaire d'utiliser un spectromètre FTIR pour analyser spectralement la lumière ayant interagi avec l'échantillon. Un détecteur sensible dans l'infrarouge suffit à quantifier l'intensité de la lumière transmise ou diffusée par l'échantillon, pour chacune des longueurs d'onde des QCL.

Par ailleurs, en utilisant une pluralité de détecteurs formant une matrice de pixels, typiquement un imageur IR comprenant des bolomètres, il devient possible de réaliser de l'imagerie multi-spectrale sans spectromètre FTIR. Une telle solution permet de réaliser des images à grand champ de vue et résolues spatialement, sans scanner l'objet. L'imagerie multi-spectrale dans le moyen infrarouge est dès lors plus rapide. En outre, une telle instrumentation comprenant des lasers QCL et un imageur IR peut être relativement compacte. Cela permet de concevoir des dispositifs d'imagerie multi-spectrale IR portatifs.

Le document US 2007/296688 A1 divulgue une solution d'imagerie appliquée à un lecteur d'empreinte digitale, logée sous un écran à cristaux liquide, sous lequel, dans un exemple, une unité de source de lumière visible comprenant une source de lumière visible et une plaque de guidage de lumière correspondante, et une unité de source de lumière infrarouge comprenant une source de lumière infrarouge et une plaque de guidage de lumière correspondante sont prévues, lesdites plaques de guidage de lumière étant empilées.

Le document WO 2018/015517 A1 divulgue un dispositif d'imagerie sans lentille pour l'holographie.

Le document « Biomedical applications of mid-infrared quantum cascade lasers - a review, K. Isensee et al., The Analyst, vol. 143, no. 24, pp. 5888-5911, 2018 » divulgue des dispositifs d'imagerie IR pour l'observation d'échantillons, en particulier des échantillons biologiques. La section 5 de ce document, intitulée « 5. Microspectroscopy of tissue thin sections » mentionne notamment l'association de QCL et de bolomètres au sein d'un système d'imagerie multi-spectrale IR. Cela permet d'observer un échantillon, sous forme de fine lamelle, en le disposant entre la source de lumière basée sur les QCL et le capteur d'image à base de bolomètres. Une image grand champ peut ainsi être obtenue sans scanner l'objet. Cela permet de réduire le temps d'acquisition de l'image. Le débit d'analyses par imagerie multi-spectrale IR est donc considérablement augmenté.

Un tel dispositif permet donc d'obtenir des informations spectrales résolues spatialement sans scanner l'échantillon. Il permet d'obtenir sur un large champ de vue une pluralité d'images de l'échantillon, chaque image étant fonction de la réponse spectrale de l'échantillon à la lumière émise par les différents lasers QCL. Un tel dispositif permet par exemple de réaliser un diagnostic sur des tissus biologiques afin de déterminer des zones cancéreuses et des zones saines.

Un inconvénient de ce dispositif est qu'il nécessite une préparation de l'échantillon sous forme de lamelle mince. Un prélèvement d'échantillon sur un objet à imager est donc nécessaire. Ce prélèvement est invasif. Cela ne permet pas de réaliser des mesures médicales in-vivo ou des contrôles qualité in-situ, c'est-à-dire directement sur l'objet.

Il existe donc un besoin consistant à fournir un dispositif d'imagerie multi-spectrale IR non invasif, compact, et permettant de réaliser des images grand champ avec un temps d'acquisition réduit.

La présente invention, qui est définie dans les revendications 1 et 7, a pour objectifs de proposer un tel dispositif, palliant au moins en partie les inconvénients des solutions existantes mentionnées ci-dessus.

Un autre objet de la présente invention concerne un procédé de fabrication d'un dispositif d'imagerie multi-spectrale IR non invasif.

Les autres objets, caractéristiques et avantages de la présente invention apparaîtront à l'examen de la description suivante et des dessins d'accompagnement. Il est entendu que d'autres avantages peuvent être incorporés. En particulier, certaines caractéristiques et certains avantages du dispositif peuvent s'appliquer *mutatis mutandis* au procédé, et réciproquement.

### RÉSUMÉ

Pour atteindre ces objectifs, la présente invention propose un dispositif d'imagerie infra-rouge sans lentilles selon la revendication 1.

Le capteur est configuré pour détecter une partie réfléchie de la lumière émise, en particulier selon des directions de détection présentant des sens opposés aux directions d'émission de la lumière émise par la source de lumière.

De cette manière, il n'est pas nécessaire de mettre en forme l'échantillon à imager. Le dispositif permet avantageusement d'imager un échantillon ou au moins une partie d'un objet sans prélèvement, de manière non-invasive. Il suffit par exemple de placer le dispositif à proximité immédiate de l'échantillon à imager, pour obtenir une pluralité d'images selon plusieurs longueurs d'onde du domaine IR.

Ce dispositif permet également de réaliser ces images avec un temps d'acquisition réduit. Chaque image est en effet acquise directement en une seule acquisition, contrairement à un système basé sur le principe de la cartographie, nécessitant une acquisition en chaque point de l'image à réaliser.

Ce dispositif est en outre avantageusement dépourvu de lentilles optiques pour former l'image sur le capteur. Cela permet de simplifier considérablement l'instrumentation. Le coût du dispositif est diminué. Cela permet en outre de réduire l'encombrement du dispositif. La compacité du dispositif est améliorée.

Il n'est en outre plus nécessaire de prévoir un espace entre la source de lumière IR et l'imageur IR pour introduire l'échantillon. L'encombrement d'un tel dispositif est encore réduit.

La présente invention concerne aussi un procédé d'utilisation d'un tel dispositif d'imagerie multi-spectrale IR en réflexion, dans lequel le dispositif est au contact ou à proximité immédiate d'une zone à imager de l'échantillon, de façon à ce que la distance séparant ladite zone à imager et le capteur soit inférieure à 200 µm. Cela permet de maximiser le flux de lumière réfléchie collectée par le capteur. Une telle utilisation est particulièrement avantageuse pour des applications de diagnostic des tissus biologiques, par exemple dans le domaine de l'histopathologie pour différencier des tissus sains de tissus tumoraux.

La présente invention concerne encore un procédé de fabrication d'un tel dispositif selon la revendication 7.

### BRÈVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
La FIGURE 1A illustre schématiquement en vue de perspective un dispositif d'imagerie IR multi-spectrale selon un mode de réalisation de la présente invention.
La FIGURE 1B est un agrandissement d'une partie du dispositif illustré à la FIGURE 1A.
La FIGURE 2 illustre schématiquement en coupe un dispositif d'imagerie IR multi-spectrale selon un mode de réalisation de la présente invention.
La FIGURE 3 présente un calcul du flux de lumière réfléchie par un échantillon et reçu par un pixel d'un imageur IR, en fonction de la distance entre le pixel et l'échantillon.
La FIGURE 4 illustre schématiquement en vue de perspective une puce photonique selon un mode de réalisation de la présente invention.
La FIGURE 5 illustre schématiquement en vue de dessus un arrangement relatif des pixels d'une matrice de détection et des émetteurs d'une matrice d'émission, selon un mode de réalisation de la présente invention.
La FIGURE 6A illustre schématiquement en coupe une structure d'extraction passive en regard d'un guide d'onde, formés sur une puce photonique, selon un mode de réalisation de la présente invention.
La FIGURE 6B illustre schématiquement en coupe une structure d'extraction passive en regard d'un guide d'onde, formés sur une puce photonique, selon un autre mode de réalisation de la présente invention.
La FIGURE 7 illustre schématiquement en coupe un capteur IR matriciel et une puce photonique, empilés l'un sur l'autre selon un mode de réalisation de la présente invention.
La FIGURE 8A illustre schématiquement en vue de dessus une matrice de détection selon un mode de réalisation de la présente invention.
La FIGURE 8B illustre schématiquement en vue de dessus une matrice d'émission selon un mode de réalisation de la présente invention.
La FIGURE 8C illustre schématiquement en vue de dessus une superposition d'une matrice d'émission et d'une matrice de détection selon un mode de réalisation de la présente invention.
La FIGURE 9A illustre schématiquement en coupe un assemblage d'un premier substrat comprenant des structures d'extraction passives avec un deuxième substrat comprenant des guides d'onde, de manière à former une puce photonique selon un mode de réalisation de la présente invention.
La FIGURE 9B illustre schématiquement en coupe la puce photonique obtenue après assemblage, tel qu'illustré à la FIGURE 9A.
Les FIGURES 10A à 10H illustrent schématiquement des étapes de fabrication de structures d'extraction passives selon un mode de réalisation de la présente invention.
Les FIGURES 11A à 11D illustrent schématiquement des étapes de fabrication de guides d'onde selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions des différentes structures (extraction, guide d'onde, pixel) ne sont pas représentatives de la réalité.

### DESCRIPTION DÉTAILLÉE

La présente invention est définie dans les revendications 1 et 7.

Selon un exemple, la source de lumière et le capteur sont empilés l'un sur l'autre.

Selon un exemple, la source de lumière et le capteur sont disposés relativement l'un à l'autre de manière à ce que la source de lumière soit plus proche de l'échantillon que le capteur, en fonctionnement.

Selon un exemple, la source de lumière et le capteur sont disposés relativement l'un à l'autre de manière à ce que le capteur soit plus proche de l'échantillon que la source de lumière, en fonctionnement.

Selon un exemple, la source de lumière et le capteur sont disposés relativement l'un à l'autre de manière à ce que le capteur et la source de lumière soient situés à une distance sensiblement identique de l'échantillon, en fonctionnement.

Selon un exemple, les pixels du capteur sont formés par des bolomètres.

Selon un exemple, les émetteurs de lumière sont agencés sous forme d'une matrice d'émission.

Selon un exemple, les pixels du capteur sont agencés sous forme d'une matrice de détection.

Selon un exemple, la puce photonique est superposée au capteur.

Selon un exemple, les émetteurs de lumière sont alternés avec les pixels du capteur, en projection selon une direction d'empilement de la puce photonique et du capteur.

Selon un exemple, les émetteurs de lumière entourent les pixels du capteur, en projection selon une direction d'empilement de la puce photonique et du capteur.

Les structures d'extraction passives permettent avantageusement de s'affranchir d'une électronique (structure active). Cela permet d'augmenter la compacité du dispositif. Cela permet de limiter voire de supprimer un échauffement local au niveau des émetteurs de lumière, ce qui est un enjeu majeur pour les longueurs d'onde du domaine infrarouge.

Selon un exemple, la puce photonique présente une épaisseur comprise entre 100 microns et 2 mm. Une telle épaisseur avantageusement inférieure ou égale à 2 mm permet de maintenir l'au moins une source de lumière, typiquement la source de lumière secondaire, suffisamment proche du capteur. Cela permet de limiter ou d'éviter les pertes optiques entre la source secondaire et le capteur. Cela permet également d'améliorer la résolution spatiale de ce dispositif sans lentilles.

Selon un exemple, les structures d'extraction passives présentent chacune au moins une facette inclinée d'un angle compris entre 30° et 60° par rapport à la face d'émission.

Selon un exemple, les facettes des structures d'extraction passives sont en regard des guides d'onde et sont configurées pour réfléchir la lumière sortant des guides d'onde selon la pluralité de directions d'émission, de façon à former des miroirs d'extraction.

Selon un exemple, la source de lumière primaire comprend une pluralité de lasers à cascade quantique QCL.

Selon un exemple, les guides d'onde sont formés directement sur la première face du premier substrat à base de silicium, dans au moins une couche en un matériau différent du silicium, et les structures d'extraction passives sont formées dans ladite au moins une couche.

Selon un exemple, les guides d'onde sont formés sur une deuxième face d'un deuxième substrat, et le deuxième substrat est assemblé au premier substrat de manière à ce que les guides d'ondes soient en regard des structures d'extraction du premier substrat.

Selon un exemple, le procédé comprend en outre un amincissement du deuxième substrat à partir d'une face opposée à la deuxième face.

Selon un exemple, les structures d'extraction passives sont gravées de manière à présenter chacune au moins une facette inclinée d'un angle compris entre 30° et 60° par rapport à la première face.

Selon un exemple, un dépôt métallique est effectué sur chacune desdites au moins une facette, de façon à former des miroirs d'extraction.

La présente invention trouve pour domaine préférentiel d'application une plateforme de diagnostic des tissus biologiques par analyse optique dans le domaine spectral du moyen infrarouge (MIR), non-invasive.

Le dispositif selon la présente invention, combinant, dans un mode de réalisation, une série de QCLs et un détecteur IR sans lentilles intermédiaires, agencés de façon à permettre une imagerie IR multi-spectrale en réflexion, permet notamment de réaliser de tels diagnostics de façon non-invasive.

Le dispositif selon la présente invention peut avantageusement être fabriqué à l'aide des technologies classiques de micro-fabrication, en particulier les technologies silicium développées dans les filières microélectroniques.

Dans ce qui suit, le terme « absorption » ou ses équivalents se réfère au phénomène par lequel l'énergie d'une onde électromagnétique est transformée en une autre forme d'énergie, par exemple sous forme de chaleur.

Dans ce qui suit, le terme « diffusion » ou ses équivalents se réfère au phénomène par lequel un milieu de propagation produit une répartition, dans de nombreuses directions, de l'énergie d'une onde électromagnétique, lumineuse par exemple.

Dans ce qui suit, le terme « réflexion » ou ses équivalents se réfère au phénomène de réémission depuis une surface d'un rayonnement lumineux incident, selon une ou plusieurs directions présentant des sens opposés à la direction incidente. Dans la présente description, une surface est considérée comme réfléchissante dès lors qu'elle réémet une partie au moins d'un rayonnement lumineux incident. La surface de réflexion peut être caractérisée par un facteur de réflexion compris entre 0 et 1. La réflexion peut être spéculaire (une direction de réflexion), ou diffuse (plusieurs directions de réflexion).

On entend par un objet ou un matériau « transparent à une longueur d'onde donnée » ou simplement « transparent », un objet ou un matériau laissant passer au moins 90% de l'intensité lumineuse de la lumière présentant cette longueur d'onde. Par exemple, une plaque de silicium présentant une épaisseur inférieure ou égale à 1 mm est transparente à un rayonnement lumineux présentant une longueur d'onde comprise entre 6 µm et 10 µm. Les pertes optiques par absorption du silicium sont inférieures à 5 dB/cm sur cette gamme de longueurs d'onde.

Le ou les rayonnement(s) lumineux incident(s) sont émis par une ou des source(s) primaire(s) correspondante(s). La lumière émise par ces sources appartient au domaine infrarouge et de préférence au domaine du moyen infrarouge, c'est-à-dire pour une gamme de longueur d'onde comprise entre 5 µm et 11 µm. Ces sources primaires comprennent typiquement une pluralité de lasers monochromatiques ou quasi-monochromatiques, présentant chacun une longueur d'onde principale. La longueur d'onde principale est l'unique longueur d'onde émise par un laser monochromatique, ou la longueur d'onde principalement émise par un laser quasi-monochromatique.

Le dispositif selon l'invention comprend en outre un « capteur ». Ce capteur se présente typiquement sous forme d'une matrice de photodétecteurs IR formant des pixels. Les termes « capteur » et « imageur » sont donc ici employés en synonymes.

On entend par un élément structurel, une couche, « à base » d'un matériau A, un élément structurel, une couche comprenant ce matériau A uniquement ou ce matériau A et éventuellement d'autres matériaux, par exemple des éléments dopants ou des éléments d'alliage. Ainsi, si un substrat transparent est désigné comme étant « à base de silicium », cela signifie qu'il peut être formé uniquement de silicium ou de silicium et éventuellement d'autres matériaux, par exemple des impuretés ou du germanium.

Dans la présente demande, le diamètre, la largeur et la longueur sont prises selon une direction transversale à l'axe d'empilement. L'épaisseur ou la profondeur sont prises selon l'axe d'empilement.

Dans la présente description, l'expression « sans lentilles » signifie que le dispositif ne comprend pas d'éléments optiques sous forme de lentilles sur le trajet des rayons lumineux entre la face d'émission de la source de lumière et le capteur.

La présente invention peut servir à l'imagerie d'échantillons, en particulier d'échantillons de nature biologique, et en particulier in vivo. Le dispositif d'imagerie IR multi-spectrale peut ainsi être appliqué directement contre la peau d'un patient pour des besoins de diagnostic. La face d'émission de la source est de préférence positionnée de façon à être sensiblement parallèle à la surface de l'échantillon. La direction principale d'émission de la source de lumière est ainsi sensiblement perpendiculaire à la surface de l'échantillon.

De préférence, la source de lumière est configurée pour émettre, via chaque émetteur, de la lumière dans une portion de l'espace, autour d'une direction principale d'émission. Notamment, la portion de l'espace peut être une portion conique dont l'axe est la direction principale d'émission. La direction principale d'émission peut être perpendiculaire à la face d'émission de la source de lumière. D'une manière générale, la direction des rayons lumineux émis présente une composante majoritaire suivant la direction principale d'émission, et une composante minoritaire suivant une direction perpendiculaire à la direction principale d'émission.

Avantageusement, les émetteurs de la source de lumière ont des directions principales d'émissions parallèles.

De préférence, chaque pixel du capteur est configuré pour recevoir de la lumière depuis une portion de l'espace, autour d'une direction principale de détection. La direction principale de détection peut être perpendiculaire à la face de détection du capteur. D'une manière générale, la direction des rayons lumineux détectés, issus de la réflexion, présente une composante majoritaire suivant la direction principale de détection et une composante minoritaire suivant une direction perpendiculaire à la direction principale de détection.

Avantageusement, les pixels du capteur ont des directions principales de détection parallèles.

De préférence, les directions principales de détection et les directions principales d'émission sont parallèles. Avantageusement, les directions principales de détection et/ou les directions principales d'émission sont perpendiculaires à la surface de l'échantillon.

Suivant un aspect de l'invention, les directions de détection et les directions d'émission ont des sens opposés. Cela ne signifie pas que les directions sont parallèles, car la lumière, aussi bien émise que réfléchie, couvrira généralement une certaine portion de l'espace. Cependant, leurs composantes principales ont des sens opposés.

Selon l'invention, le dispositif est configuré pour que la lumière sorte du dispositif en direction de l'échantillon et pour qu'une partie de cette lumière, réfléchie, entre à nouveau dans le dispositif après avoir interagi avec l'échantillon.

Suivant des modes de réalisation, le capteur et la source de lumière sont superposés. Cela s'entend d'une disposition relative de ces deux composants, pour le moins en ce qui concerne les faces d'émission et de détection. Cependant, la superposition ne signifie pas forcément que, en projection selon un axe d'empilement, les émetteurs de lumière et les pixels sont superposés. Notamment, suivant cette projection, les émetteurs peuvent entourer les pixels, ou inversement.

Il est précisé que dans le cadre de la présente invention, le terme « sur », « surmonte », « recouvre » ou « sous-jacent » ou leurs équivalents ne signifient pas « au contact de ». Ainsi par exemple, une puce photonique recouvrant un imageur ne signifie pas obligatoirement que ceux-ci sont directement au contact l'un de l'autre mais cela signifie que la puce photonique recouvre au moins partiellement l'imageur en étant soit directement à son contact, soit en étant séparé de celui-ci par au moins une autre couche ou au moins un autre élément.

Les termes « sensiblement », « environ », « de l'ordre de » signifient « à 10% près » ou, lorsqu'il s'agit d'une orientation angulaire, « à 10° près » et de préférence « à 5° près ». Ainsi, une direction sensiblement normale à un plan signifie une direction présentant un angle de 90±10° par rapport au plan.

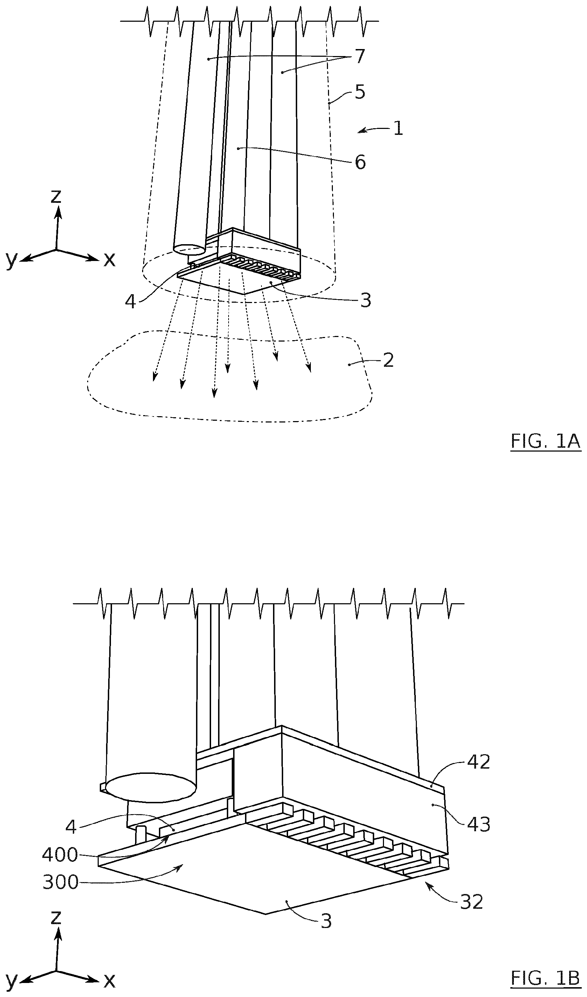

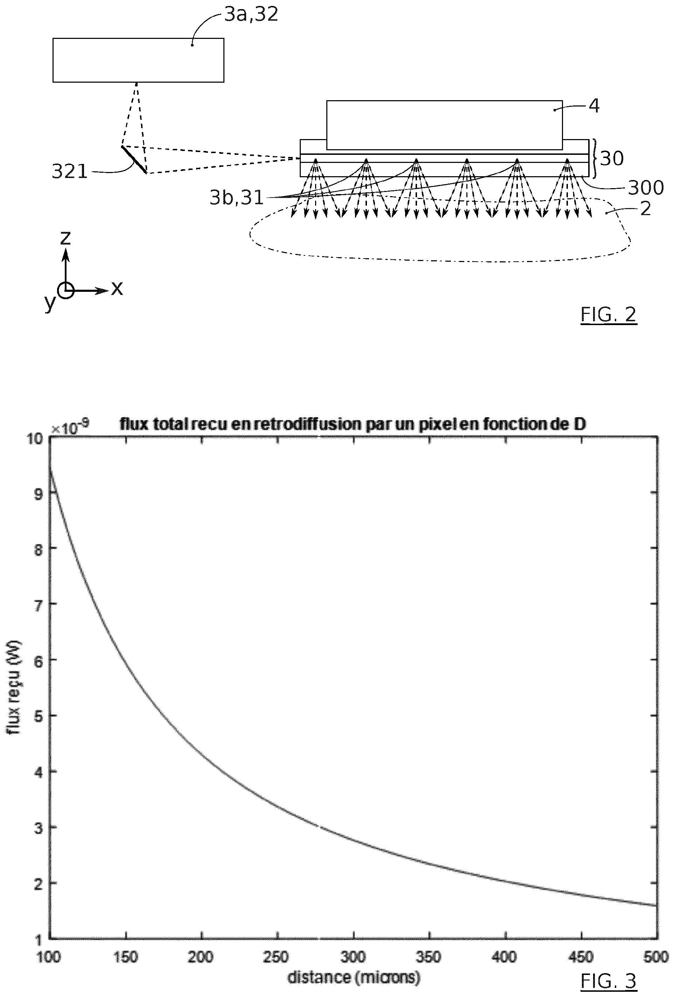

Un premier exemple de dispositif selon l'invention va maintenant être décrit en référence aux figures 1A, 1B et 2.

Comme illustré sur le schéma de la figure 1A, le dispositif 1 d'imagerie IR en réflexion est destiné à venir à proximité immédiate ou au contact de l'échantillon 2 à imager. L'échantillon 2 est par exemple un tissu biologique ou un produit agroalimentaire.

Le dispositif 1 comprend typiquement un corps 5 abritant une source de lumière 3 et un imageur 4. Le corps 5 peut se présenter sous forme cylindrique, tel qu'illustré sur la figure 1A, ou plus généralement sous toute forme présentant une bonne ergonomie, par exemple de façon à faciliter la prise en main du dispositif 1.

Le corps 5 peut comprendre des composants périphériques, tels qu'une alimentation électrique ou une connexion 6 d'alimentation électrique, ou encore au moins une fibre optique 7. Une telle fibre optique 7 permet notamment de visualiser la zone de l'échantillon 2 à imager. Elle peut être reliée à une caméra. Cela permet de d'améliorer la précision de positionnement du dispositif contre l'échantillon, par exemple au niveau d'un potentiel carcinome directement sur un patient.

Le corps 5 comprend à son extrémité distale la source de lumière 3 et l'imageur 4. La figure 1B montre une vue agrandie de l'extrémité distale du dispositif 1. La source de lumière 3 et l'imageur 4 peuvent typiquement être superposés. Par exemple, la source de lumière 3 et l'imageur 4 forment un empilement selon z, avec la source de lumière 3 située au plus près de l'extrémité distale du dispositif 1, et l'imageur 4 situé contre la source de lumière 3, en léger retrait de l'extrémité distale du dispositif 1. La source de lumière 3 présente une face d'émission 300 destinée à émettre la lumière. L'imageur 4 présente une face de détection 400 destinée à recevoir la lumière réfléchie par l'échantillon 2. Pour permettre une telle imagerie en réflexion, les faces d'émission et de détection 300, 400 sont tournées d'un même côté, vers l'échantillon 2 à analyser.

L'imageur 4 est configuré pour détecter une lumière dans le domaine IR ou MIR. Il comprend typiquement des bolomètres IR répartis de façon à former une matrice de pixels. L'imageur 4 peut être associé à une électronique de commande 42, et/ou un régulateur 43 destiné à thermaliser les bolomètres IR.

La source de lumière 3 peut être une source de lumière primaire 3a, ou une source de lumière secondaire 3b. Tel qu'illustré à la figure 2, le dispositif peut typiquement comprendre une source de lumière primaire 3a couplée à des émetteurs de lumière 31 formant la source de lumière secondaire 3b. Les émetteurs de lumière 31 sont dans ce cas des structures d'extraction passives. Selon une possibilité non illustrée, les émetteurs de lumière 31 sont des diodes électroluminescentes (LED) et forment directement une source de lumière primaire 3a.

Tel qu'illustré à la figure 2 et de façon préférée, le dispositif comprend une source de lumière primaire 3a couplée à une source de lumière secondaire 3b. Cela permet de déporter la source de lumière primaire 3a. Cela permet de réduire l'encombrement de la source de lumière 3 au niveau de l'extrémité distale du dispositif.

La source de lumière primaire 3a peut typiquement comprendre des lasers à cascade quantique QCL 32 émettant selon des longueurs d'onde comprises entre 5 µm et 10 µm. En particulier, la source de lumière primaire 3a comprend une pluralité de QCL configurés pour émettre simultanément chacun une longueur d'onde différente. Chacun des lasers QCL 32 peut être associé à une pluralité d'émetteurs de lumière 31 de la source de lumière secondaire 3b. La surface d'émission 300 est ainsi augmentée. Cela permet d'éclairer plus largement et/ou plus uniformément la zone de l'échantillon 2 à imager.

Dans ce cas, les émetteurs de lumière 31 sont de préférence des structures d'extraction passives couplées aux lasers QCL 32 via des miroirs 321, des fibres optiques ou des guides d'ondes 312. Les émetteurs de lumière 31 et les guides d'ondes 312 sont typiquement regroupés au sein d'une puce photonique 30. Dans ce mode de réalisation, la puce photonique 30 est posée sur un imageur 4 formé par une matrice de bolomètres. La distance séparant la puce photonique 30 de la partie sensible des bolomètres, ou encore la distance séparant la face d'émission 300 de la face de détection 400, est de l'ordre de quelques dizaines de microns, par exemple comprise entre 10 µm et 200 µm. La lumière issue des lasers QCL 32 est guidée par les guides d'ondes 312 jusqu'aux structures d'extraction passives formant les émetteurs de lumière 31, puis dirigée vers l'échantillon 2 par les émetteurs de lumière 31. Les émetteurs de lumière 31 forment typiquement une matrice d'émission configurée pour éclairer de façon uniforme la zone de l'échantillon 2 à imager. L'échantillon 2 va typiquement absorber, réfléchir ou diffuser la lumière émise ou réémise par les émetteurs de lumière 31. La matrice de bolomètres placée derrière la puce photonique 30 est configurée pour recevoir la partie réfléchie de la lumière. Avantageusement, la puce photonique 30 est à base de silicium. Le silicium est transparent aux longueurs d'onde IR et MIR. Cela permet de placer la puce photonique 30 devant l'imageur 4, sans écranter les bolomètres. La puce photonique 30 peut être à base d'un autre matériau transparent aux longueurs d'onde IR et MIR, par exemple à base de germanium.

La figure 3 montre un résultat de flux collecté en réflexion par un pixel (bolomètre) de 25 µm de côté pour un éclairement de 10 mW/cm² d'un objet réfléchissant lambertien présentant un albédo égal à 1. Pour une distance de 250 µm entre le pixel et l'objet, le pixel reçoit un flux de lumière réfléchie présentant une puissance optique d'environ 3 nW. Une telle puissance est parfaitement détectable par un pixel d'imageur IR, en particulier de type bolomètre IR. Comme illustré à la figure 3, plus la distance entre la zone d'échantillon 2 à imager et l'imageur 4 est faible, plus le flux de lumière réfléchie collecté par l'imageur 4 est important. **En** outre, la résolution spatiale d'un dispositif 1 sans lentilles est d'autant meilleure que la distance séparant la zone d'échantillon 2 à imager et l'imageur 4 est faible. Ainsi, avantageusement, la puce photonique 30 présente une épaisseur selon z inférieure ou égale à 300 µm, de préférence inférieure ou égale à 250 µm, et de préférence inférieure ou égale à 200 µm.

Le dispositif 1 est de préférence utilisé directement en contact ou à proximité immédiate de la zone d'échantillon 2 à imager. En particulier, la face d'émission 300 peut être placée contre la zone à imager. De cette façon, la distance séparant la zone à imager et le capteur peut être inférieure ou égale à 250 µm, de préférence inférieure à 200 µm. Cela permet de maximiser le flux de lumière réfléchie collectée par le capteur.

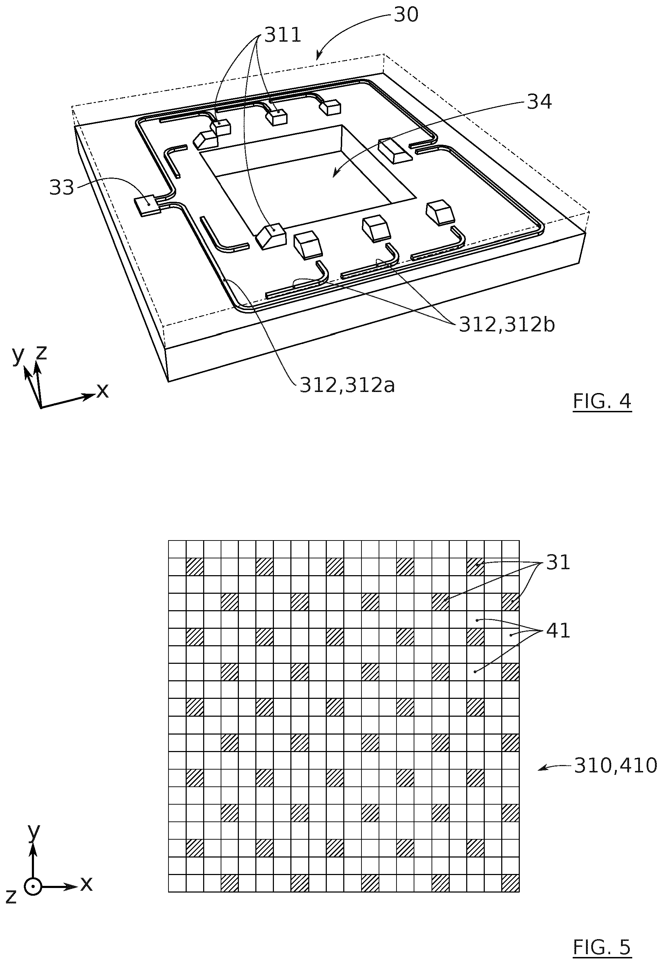

La figure 4 illustre un exemple de puce photonique 30. Dans cet exemple, les structures d'extraction passives 311 sont disposées en pourtour d'une ouverture 34 de la puce photonique 30. Cette ouverture 34 peut être configurée pour accueillir au moins en partie l'imageur 4. Ainsi, la matrice d'émission entoure la matrice de détection, en projection selon z. L'ouverture 34 permet de laisser passer les rayons réfléchis par l'échantillon, vers l'imageur 4 (non illustré). Ces rayons réfléchis présentent typiquement une direction principale de détection selon l'axe z, de sens +z.

Les structures d'extraction passives 311 sont configurées pour réémettre des rayons incidents vers l'échantillon (non illustré). Ces rayons incidents présentent typiquement une direction principale d'émission selon l'axe z, de sens -z.

Les structures d'extraction passives 311 sont de préférence couplées à des guides d'onde 312, 312a, 312b, et de préférence chacune des structures d'extraction passives 311 est couplée de façon individuelle à un unique guide d'onde 312b. Selon un exemple, la puce photonique 30 comprend une entrée optique 33 destinée à recevoir la lumière émise par la source primaire 3a. Cette entrée optique 33 dessert des guides d'ondes principaux 312a véhiculant la lumière vers l'ensemble des structures d'extraction passives 311. Des guides d'ondes secondaires 312b peuvent être associés chacun à une structure d'extraction passive 311 particulière. Les guides d'ondes secondaires 312b peuvent par exemple être couplés aux guides d'ondes principaux 312a par un couplage évanescent, tel qu'illustré sur la figure 4. L'utilisation d'une pluralité de guides d'onde peut permettre de passer plus de puissance optique. Cela permet également d'éclairer l'échantillon selon les différentes longueurs d'ondes des QCL, simultanément.

Les structures d'extraction passives 311 présentées dans cet exemple peuvent être remplacées par des émetteurs de lumière 31, par exemple des LED. Dans ce cas, il n'est pas nécessaire d'utiliser des guides d'onde 312. Des combinaisons de différents types d'émetteurs de lumière 31, par exemple des LED et des structures d'extraction passives 311, peuvent être envisagées. Selon une possibilité, une partie des émetteurs de lumière 31 sont par exemple des LED, et une autre partie des émetteurs de lumière 31 sont par exemple des structures d'extraction passives 311. Dans ce cas, des guides d'onde 312 peuvent être associés aux LED et aux structures d'extraction passives 311 de manière à véhiculer la lumière émise en chaque point de la matrice d'émission.

La figure 5 présente un autre exemple de répartition des émetteurs de lumière 31. Dans cet exemple, les matrices d'émission et de détection 310, 410 sont au moins en partie superposées, en projection selon z. Ainsi, les émetteurs de lumière 31 sont chacun entourés par des pixels 41 de l'imageur 4. Cela permet d'obtenir une surface d'émission, dans le plan de la feuille, relativement homogène et uniforme. La répartition des pixels 41 et des émetteurs de lumière 31 est de préférence effectuée de façon à obtenir un bon compromis entre la surface d'émission et la surface de détection. Des pixels 41 peuvent être masqués par des émetteurs de lumière 31. Cela permet de simplifier la conception de la matrice de bolomètres tout en conservant une surface de détection acceptable.

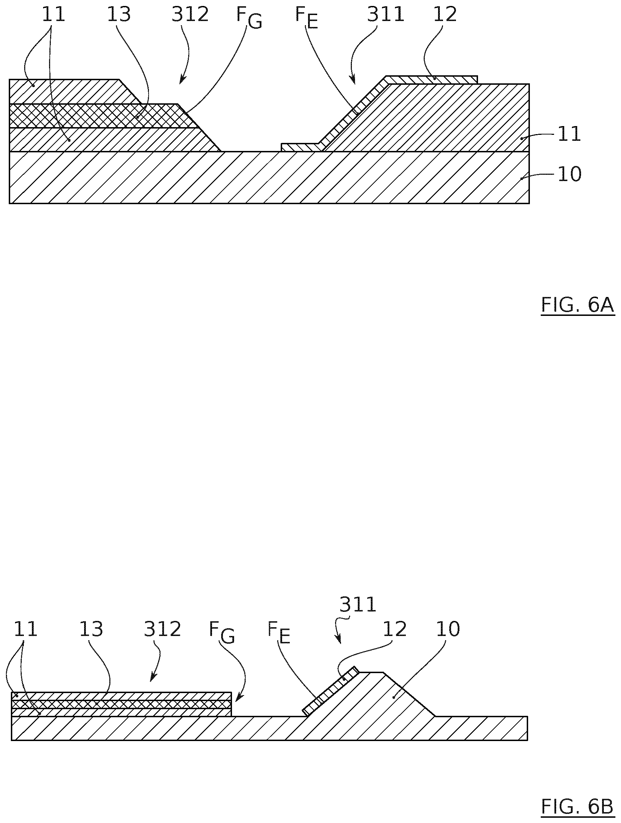

Les figures 6A et 6B illustrent deux modes de réalisation particuliers d'une structure d'extraction passive 311 et d'un guide d'onde 312. Les guides d'onde 312 sont configurés pour guider une lumière de longueur d'onde comprise entre 5 µm et 11 µm. Dans l'exemple de la figure 6A, le guide d'onde 312 et la structure d'extraction 311 sont formés dans une couche 11 à base de germanium ou de silicium-germanium SiGe, sur un substrat 10 à base de silicium Si. La structuration du guide d'onde 312 et de la structure d'extraction 311 peut ainsi se faire selon une approche dite monolithique. Cela permet de former le guide d'onde 312 et la structure d'extraction 311 directement sur un même substrat 10.

Le guide d'onde 312 comprend typiquement une gaine formée par la couche 11 et un coeur 13 formé au sein de la couche 11. La gaine est par exemple en SiGe présentant une teneur en germanium d'environ 20%. Le cœur 13 est par exemple en Ge ou en SiGe présentant une teneur en germanium d'environ 40%. Le guide d'onde 312 peut présenter une facette de sortie F_{G} inclinée par rapport au plan basal du substrat 10. Une telle facette inclinée peut typiquement être obtenue par gravure humide à base d'hydroxyde de tétraméthylammonium (TMAH) ou d'hydroxyde de potassium (KOH). D'autres matériaux de guide d'onde peuvent être utilisés, par exemple et de façon non limitative : CaF2, BaF2, ZnS, ZnSe. CdSe, SiN, AIN, Ta2O5, TiO2, ZrO2, carbone amorphe, chalcogénure.

La structure d'extraction 311 est ici formée directement dans la couche 11, par exemple en SiGe présentant une teneur en germanium d'environ 20%. La structure d'extraction 311 présente typiquement une facette F_{E} inclinée par rapport au plan basal du substrat 10. L'angle d'inclinaison peut être compris entre 30° et 60° par rapport au plan basal, par exemple de l'ordre de 45° ou de 55°. La facette F_{E} est située en regard de la facette de sortie F_{G} du guide d'onde 312. La facette F_{E} est configurée pour réfléchir la lumière sortant du guide d'onde 312 selon des directions d'émission ou de réémission présentant une composante principale sensiblement normale au plan basal. La facette F_{E} est de préférence métallisée par une couche de métal 12. La facette F_{E} de la structure d'extraction 311 forme typiquement un miroir d'extraction.

Dans l'exemple de la figure 6B, la structure d'extraction 311 est formée dans le substrat 10 à base de silicium Si, et le guide d'onde 312 est formé dans une couche 11 à base de germanium ou de silicium-germanium SiGe. La structuration du guide d'onde 312 peut ainsi se faire sur un deuxième substrat indépendant du substrat 10 comprenant la structure d'extraction 311, selon une approche dite hétérogène. Dans cet exemple, le guide d'onde 312 comprend également une gaine formée par la couche 11 et un cœur 13 formé au sein de la couche 11, comme précédemment. Le guide d'onde 312 peut présenter une facette de sortie F_{G} normale au plan basal du substrat 10. Une telle facette normale peut typiquement être obtenue par gravure sèche, par exemple par plasma. La structure d'extraction 311 est ici formée directement dans le substrat 10. Elle présente également une facette F_{E} en regard de la facette de sortie F_{G} du guide d'onde 312. Cette facette F_{E} est inclinée et de préférence métallisée, comme précédemment.

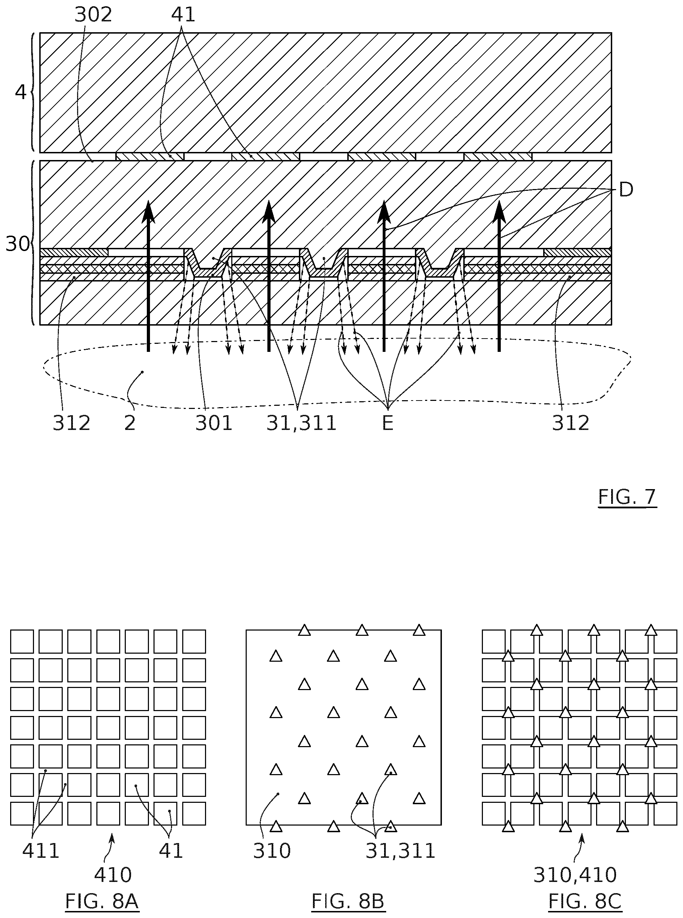

La figure 7 présente un dispositif comprenant une puce photonique 30 présentant une face 301 destinée à venir à proximité ou au contact d'un échantillon 2, typiquement un échantillon biologique. Le dispositif comprend en outre un imageur 4 comprenant une pluralité de pixels 41, par exemple sous forme d'une matrice de microbolomètres. La puce photonique 30 présente une face 302 opposée à la face 301. Cette face 302 est ici destinée à venir à proximité ou au contact des pixels 41 de l'imageur 4.

La puce photonique 30 est de préférence configurée pour éclairer l'échantillon 2 dans le moyen infrarouge de manière homogène selon des directions d'émission E. La puce photonique 30 est typiquement transparente dans le moyen infrarouge de manière à laisser passer la partie de la lumière rétrodiffusée ou réfléchie par l'échantillon 2 vers les pixels 41, selon des directions de détection D.

La puce photonique 30 comprend par exemple des structures d'extraction 311 et des guides d'onde 312 agencés comme décrit précédemment en référence à la figure 6B.

Les figures 8A à 8C présentent des répartitions de pixels 41 et d'émetteurs de lumière 31 permettant d'éviter ou de limiter l'écrantage des pixels 41 par les émetteurs de lumière 31. La figure 8A présente une matrice de détection 410 où les pixels 41 sont séparés les uns des autres par des zones inter-pixels 411. La figure 8B présente une matrice d'émission 310 où les émetteurs de lumière 31, par exemple des structures d'extraction 311 formant des micro-miroirs, sont disposés de façon à coïncider avec les zones inter-pixels 411 de la matrice de détection 410, une fois superposés. La figure 8C illustre une superposition des matrices d'émission et de détection 310, 410. Les micro-miroirs sont de préférence situés aux intersections des zones inter-pixels 411. Cela permet de placer des guides d'onde entre les micro-miroirs et entre les intersections, en superposition des zones inter-pixels 411 (non illustré). Ainsi, les pixels 41 de l'imageur ne sont pas écrantés par les micro-miroirs et/ou les guides d'onde de la puce photonique.

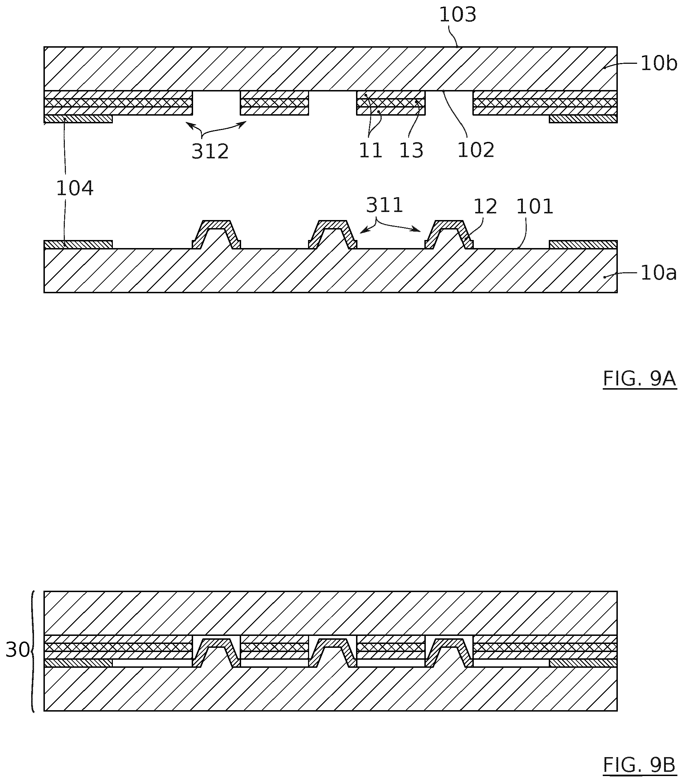

Les figures 9A, 9B illustrent un principe de formation de la puce photonique selon une approche hétérogène. Selon cette approche, les structures d'extraction 311 sont formées sur une première face 101 d'un premier substrat 10a à base de silicium, et les guides d'onde 312 sont formés sur une deuxième face 102 d'un deuxième substrat 10b à base de silicium. Dans la suite, le premier substrat 10a portant les structures d'extraction 311 sous forme de micro-miroirs est dénommé « plaquette miroirs ». Le deuxième substrat 10b portant les guides d'onde 312 est dénommé « plaquette guides d'onde ». La puce photonique 30 est ensuite formée par assemblage des plaquettes guides d'onde et miroirs au niveau de leurs faces 102, 101.

Les technologies de la microélectronique permettent de réaliser ces plaquettes et de les assembler de façon compacte avec une précision d'intégration suffisante pour former la puce photonique 30.

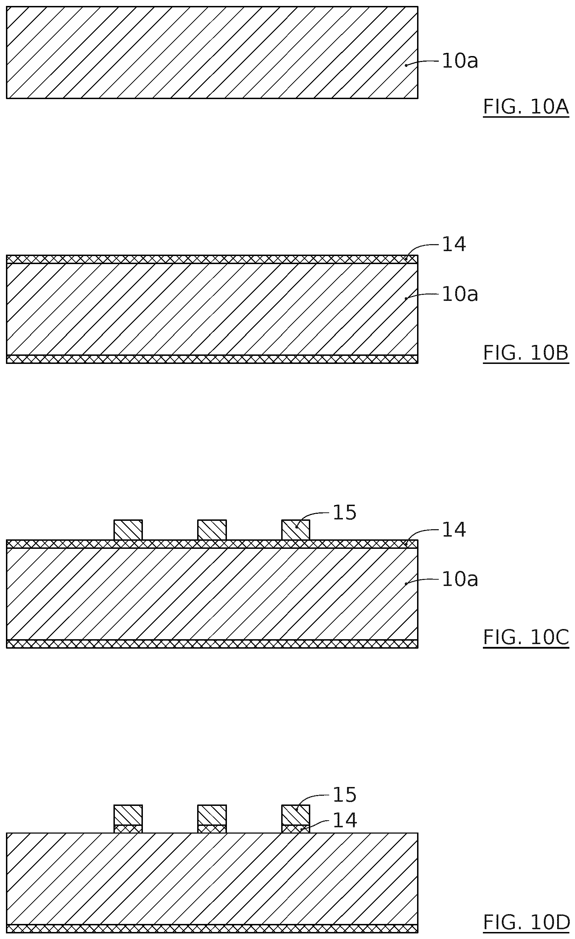

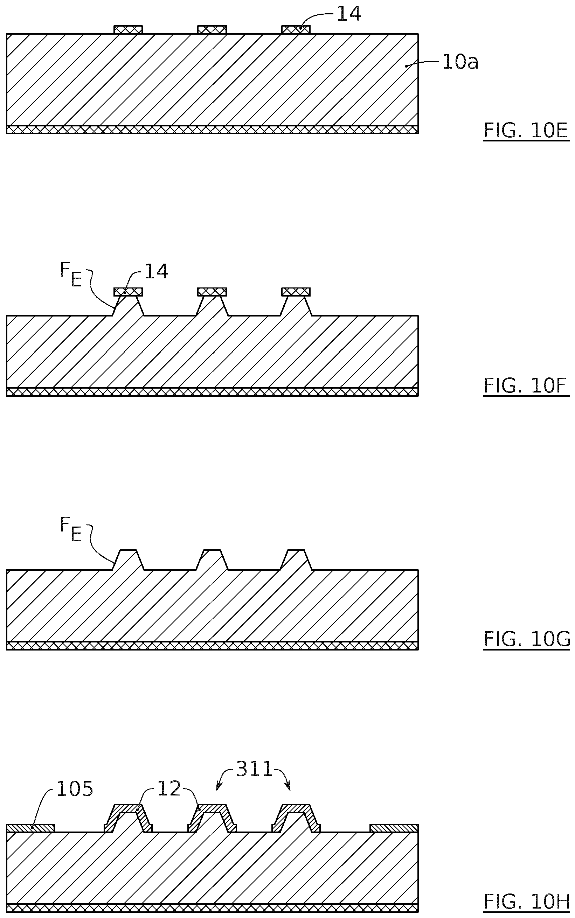

Les figures 10A à 10H présentent des étapes de fabrication de la plaquette miroirs. La figure 10A illustre la fourniture d'un substrat 10a de silicium (100). L'orientation cristalline du substrat est notamment choisie en fonction des chimies de gravure anisotrope utilisées pour la gravure des facettes des miroirs. Un masque dur 14 typiquement à base de nitrure de silicium, est déposé sur le substrat 10a, par exemple par dépôt chimique en phase vapeur à basse pression (LPCVD) (figure 10B). Des motifs 15 en résine photosensible sont ensuite formés par photolithographie (figure 10C). Le masque dur 14 est gravé (figure 10D) et la résine est retirée (figure 10E).

Le substrat 10a est ensuite gravé (figure 10F) par gravure anisotrope du Si en solution alcaline, par exemple à base de hydroxyde de tétraméthylammonium (TMAH), ou d'hydroxyde de potassium (KOH), ou de pyrocatechol et eau (EDP). L'inclinaison des facettes F_{E} obtenues après gravure peut varier selon l'orientation cristallographique du substrat, la nature du masque dur et la solution de gravure utilisée. Typiquement des angles d'inclinaison de 54,7° ou de 45° peuvent être réalisés. Cette technique permet d'obtenir des facettes très lisses. D'autres techniques permettent d'obtenir des facettes inclinées. Une technique de lithographie couramment dénommée « grey tone » (nuances de gris) consiste à faire varier la dose d'énergie lors de la lithographie de la résine servant de masque de gravure. Le motif de résine présente après développement une pente qui est transférée dans le substrat par gravure sèche, par exemple par gravure RIE (Reactive Ion Etching, soit gravure réactive ionique en français).

La hauteur des structures d'extraction ainsi formées peut être choisie en fonction de la hauteur des guides d'onde réalisés sur la plaquette guide d'ondes et/ou de la largeur des zones inter-pixels. Cette hauteur est typiquement comprise entre 9 µm et 11µm.

La masque dur 14 est ensuite retiré (figure 10G) et les facettes F_{E} sont métallisées (figure 10H). La métallisation des facettes F_{E} peut se faire par dépôt d'une bicouche titane-or Ti/Au. Le dépôt Ti/Au présente une épaisseur typiquement comprise entre 50 nm et 500 nm. La métallisation peut être réalisée au moyen d'un pochoir ou plus classiquement par photolithographie et gravure. La métallisation peut alternativement être effectuée par fluage. La technique de dépôt par fluage consiste à déposer le matériau, par exemple le métal, sur la structure, par exemple les facettes, que l'on veut recouvrir. Un recuit permet ensuite d'atteindre une transition vitreuse du matériau pour qu'il puisse épouser la forme de la structure. Le métal assure la fonction de réflecteur des micro-miroirs. Il permet en outre avantageusement de faciliter l'assemblage mécanique de la plaquette miroirs avec la plaquette guides d'onde lors d'un collage par thermocompression.

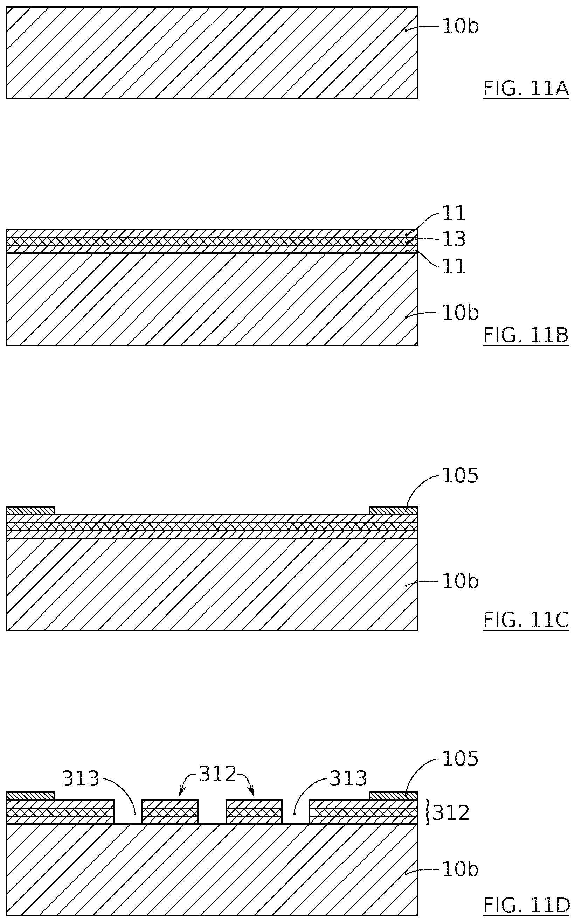

Les figures 11A à 11D présentent des étapes de fabrication de la plaquette guides d'onde. La figure 11A illustre la fourniture d'un substrat 10b de silicium. Une succession d'épitaxies permet de former les couches 11 et 13 formant respectivement la gaine et le coeur des guides d'onde (figure 11B). Les couches 11 sont par exemple formées par épitaxie de SiGe à 40% de Ge et la couche 13 est par exemple formée par épitaxie de Ge. Les épaisseurs déposées sont typiquement de l'ordre de 3 µm pour le Ge et de 3 à 5 µm pour le SiGe. Le guide d'onde obtenu à la figure 11B est un guide d'onde plan, dit guide 2D, qui s'étend sur toute la surface du substrat 10b.

Un cordon de scellement 105 en or Au est ensuite défini et réalisé par des étapes de dépôt / lithographie / gravure, en périphérie de la plaquette guides d'onde. Ce cordon de scellement 105 permet ensuite l'assemblage des plaquettes miroirs et guides d'onde.

Des zones d'extraction 313 destinées à accueillir les structures d'extraction 311 lors de l'assemblage, sont ensuite définies par lithographie / gravure (figure 11D).

Les plaquettes miroirs et guides d'onde sont ensuite assemblées. Un assemblage par thermocompression Au-Au, est de préférence utilisé. La thermocompression métal-métal présente l'avantage, outre sa mise en œuvre relativement simple et peu couteuse, d'être réalisée à basse température (<400°C), typiquement environ 250°C. D'autres techniques d'assemblage sont également possibles (collage eutectique, collage direct, collage polymère...). Les tolérances d'alignement pour ce type d'assemblage par thermocompression sont de l'ordre de quelques microns, typiquement +/-5 µm.

Après assemblage, un amincissement de la plaquette guides d'onde est de préférence effectué, depuis la face 103 tel qu'illustré à la figure 9A. Le substrat 10b présente après amincissement une épaisseur de préférence inférieure ou égale à 300 µm. Cela permet *in fine* de réduire la distance entre la surface de l'échantillon à analyser et le capteur.

La plaquette résultant de l'assemblage peut être découpée en plusieurs puces photoniques.

L'invention n'est pas limitée aux modes de réalisation décrits mais s'étend à tout mode de réalisation entrant dans la portée de la revendication 1.

## Revendications

1. Dispositif (1) d'imagerie infra-rouge sans lentilles destiné à imager un échantillon (2), comprenant au moins une source de lumière (3, 3a, 3b) configurée pour émettre une lumière selon plusieurs longueurs d'onde du domaine infrarouge, ladite au moins une source de lumière (3, 3a, 3b) présentant une face d'émission (300) destinée à émettre la lumière en direction de l'échantillon (2) à imager, ledit dispositif (1) comprenant en outre au moins un capteur (4) configuré pour détecter une partie réfléchie de la lumière émise ayant interagi avec l'échantillon, ledit capteur comprenant une pluralité de pixels (41) et présentant une face de détection (400) destinée à recevoir ladite partie réfléchie de la lumière émise, les faces d'émission et de détection (300, 400) étant tournées d'un même côté du dispositif (1), ladite au moins une source de lumière (3, 3a, 3b) comprenant une source primaire (3a) configurée pour émettre une lumière selon plusieurs longueurs d'onde du domaine infrarouge, couplée à une source secondaire (3b) configurée pour réémettre ladite lumière selon une pluralité de directions d'émission (E), la face d'émission (300) étant située au niveau de la source secondaire (3b) et la source primaire (3a) étant déportée en dehors d'une zone d'émission de la face d'émission (300), la source secondaire (3b) étant formée au moins en partie par une puce photonique (30) comprenant une pluralité de structures d'extraction passives (311) disposés sur un même plan et couplées à la source primaire (3a), le dispositif étant **caractérisé en ce que** la puce photonique (30) comprend des guides d'onde (312) configurés pour guider la lumière émise par la source primaire (3a) jusqu'aux structures d'extraction passives (311), les guides d'onde (312) étant disposés sur le même plan que les structures d'extraction passives (311).

2. Dispositif selon la revendication précédente dans lequel la source de lumière (3, 3a, 3b) et le capteur (4) sont empilés l'un sur l'autre.

3. Dispositif selon l'une quelconque des revendications précédentes dans lequel les émetteurs de lumière (31) sont agencés sous forme d'une matrice d'émission (310) et les pixels (41) du capteur sont agencés sous forme d'une matrice de détection (410), la puce photonique (30) étant superposée au capteur (4) de sorte que les émetteurs de lumière (31) soient alternés avec les pixels (41) du capteur (4), en projection selon une direction d'empilement (z) de la puce photonique (30) et du capteur (4).

4. Dispositif selon l'une quelconque des revendications précédentes dans lequel la puce photonique (30) est superposée au capteur (4) et les émetteurs de lumière (31) entourent les pixels (41) du capteur (4), en projection selon une direction d'empilement (z) de la puce photonique (30) et du capteur (4).

5. Dispositif selon l'une quelconque des revendications précédentes dans lequel les structures d'extraction passives (311) présentent chacune au moins une facette (F_{E}) inclinée d'un angle compris entre 30° et 60° par rapport à la face d'émission (300), lesdites facettes étant en regard des guides d'onde (312) et configurées pour réfléchir la lumière sortant des guides d'onde (312), selon la pluralité de directions d'émission (E), de façon à former des miroirs d'extraction.

6. Dispositif selon l'une quelconque des revendications précédentes dans lequel la puce photonique (30) présente une épaisseur inférieure ou égale à 300 µm, et de préférence comprise entre 100 microns et 2 mm.

7. Procédé de fabrication d'un dispositif (1) d'imagerie infrarouge sans lentilles selon l'une quelconque des revendications précédentes, comprenant les étapes suivantes :
- Fournir une source de lumière primaire (3a),
- Former la puce photonique (30) destinée à réémettre, au niveau d'une face d'émission (300), la lumière émise par la source primaire (3a), en formant les structures d'extraction passives (311) en saillie sur une première face (101) d'un premier substrat (10a) à base de silicium, par gravure dudit substrat (10a), et en formant sur ladite première face (101) des guides d'onde (312) en regard des structures d'extraction (311), lesdits guides d'onde (312) étant configurés pour guider la lumière émise par la source de lumière primaire (3a) jusqu'aux structures d'extraction (311),
- Fournir un capteur (4) comprenant une pluralité de pixels (41) aptes à détecter, sur une face de détection (400), une partie de la lumière émise par la source de lumière primaire (3a),
- Assembler la puce photonique (30) au capteur (4) de manière à ce que les faces d'émission et de détection (300, 400) soient tournées d'un même côté du dispositif (1),
- Coupler la source de lumière primaire (3a) aux structures d'extractions passives (311) de la puce photonique (30).

8. Procédé de fabrication selon la revendication précédente dans lequel les guides d'onde (312) sont formés directement sur la première face (101) du premier substrat (10a) à base de silicium, dans au moins une couche (11, 13) en un matériau différent du silicium, et dans lequel les structures d'extraction passives (311) sont formées dans ladite au moins une couche (11).

9. Procédé de fabrication selon la revendication 7 dans lequel les guides d'onde (312) sont formés sur une deuxième face (102) d'un deuxième substrat (10b), et dans lequel le deuxième substrat (10b) est assemblé au premier substrat (10a) de manière à ce que les guides d'ondes (312) soient en regard des structures d'extraction (311) du premier substrat (10a), le procédé comprenant en outre un amincissement du deuxième substrat (10b) à partir d'une face (103) opposée à la deuxième face (102).

10. Procédé de fabrication selon l'une quelconque des trois revendications précédentes dans lequel les structures d'extraction passives (311) sont gravées de manière à présenter chacune au moins une facette (F_{E}) inclinée d'un angle compris entre 30° et 60° par rapport à la première face (101), et dans lequel un dépôt métallique (12) est effectué sur chacune desdites au moins une facettes (F_{E}), de façon à former des miroirs d'extraction.

11. Procédé d'utilisation d'un dispositif (1) selon l'une quelconque des revendications 1 à 6, dans lequel le dispositif (1) est au contact ou à proximité immédiate d'une zone à imager de l'échantillon (2), de façon à ce que la distance séparant ladite zone à imager et le capteur (4) soit inférieure à 200 µm.

## Patentansprüche

1. Linsenlose Infrarotbildgebungsvorrichtung (1), die dazu bestimmt ist, eine Probe (2) abzubilden, die mindestens eine Lichtquelle (3, 3a, 3b) umfasst, die dazu konfiguriert ist, ein Licht gemäß mehreren Wellenlängen des Infrarotbereichs zu emittieren, wobei die mindestens eine Lichtquelle (3, 3a, 3b) eine Emissionsfläche (300) aufweist, die dazu bestimmt ist, das Licht in Richtung der abzubilden Probe (2) zu emittieren, wobei die Vorrichtung (1) außerdem mindestens einen Sensor (4) umfasst, der dazu konfiguriert ist, einen reflektierten Teil des emittierten Lichts, der mit der Probe interagiert hat, zu erfassen, wobei der Sensor eine Vielzahl von Pixeln (41) umfasst und eine Erfassungsfläche (400) aufweist, die dazu bestimmt ist, den reflektierten Teil des emittierten Lichts zu empfangen, wobei die Emissionsfläche und die Erfassungsfläche (300, 400) zu derselben Seite der Vorrichtung (1) gewandt sind, wobei die mindestens eine Lichtquelle (3, 3a, 3b) eine Primärquelle (3a) umfasst, die dazu konfiguriert ist, ein Licht gemäß mehreren Wellenlängen des Infrarotbereichs zu emittieren, gekoppelt mit einer Sekundärquelle (3b), die dazu konfiguriert ist, das Licht gemäß einer Vielzahl von Emissionsrichtungen (E) erneut zu emittieren, wobei die Emissionsfläche (300) auf der Ebene der Sekundärquelle (3b) liegt und die Primärquelle (3a) nach außerhalb einer Emissionszone der Emissionsfläche (300) verlagert ist, wobei die Sekundärquelle (3b) mindestens zum Teil von einem photonischen Chip (30) gebildet wird, der eine Vielzahl passiver Extraktionsstrukturen (311) umfasst, die auf derselben Ebene angeordnet und mit der Primärquelle (3a) gekoppelt sind, wobei die Vorrichtung **dadurch gekennzeichnet ist, dass** der photonische Chip (30) Wellenleiter (312) umfasst, die dazu konfiguriert sind, das von der Primärquelle (3a) emittierte Licht bis zu den passiven Extraktionsstrukturen (311) zu leiten, wobei die Wellenleiter (312) auf derselben Ebene wie die passiven Extraktionsstrukturen (311) angeordnet sind.

2. Vorrichtung nach dem vorstehenden Anspruch, wobei die Lichtquelle (3, 3a, 3b) und der Sensor (4) aufeinander gestapelt sind.

3. Vorrichtung nach einem der vorstehenden Ansprüche, wobei die Lichtsender (31) in Form einer Emissionsmatrix (310) eingerichtet sind und die Pixel (41) des Sensors in Form einer Erfassungsmatrix (410) eingerichtet sind, wobei der photonische Chip (30) auf dem Sensor (4) derart überlagert ist, dass die Lichtsender (31) mit den Pixeln (41) des Sensors (4) in Projektion entlang einer Stapelungsrichtung (z) des photonischen Chips (30) und des Sensors (4) abwechseln.

4. Vorrichtung nach einem der vorstehenden Ansprüche, wobei der photonische Chip (30) auf dem Sensor (4) überlagert ist und die Lichtsender (31) die Pixel (41) des Sensors (4) in Projektion entlang einer Stapelungsrichtung (z) des photonischen Chips (30) und des Sensors (4) umgeben.

5. Vorrichtung nach einem der vorstehenden Ansprüche, wobei die passiven Extraktionsstrukturen (311) jeweils mindestens eine Facette (FE) aufweisen, die um einen Winkel zwischen 30° und 60° in Bezug auf die Emissionsfläche (300) geneigt ist, wobei die Facetten den Wellenleitern (312) gegenüberliegen und dazu konfiguriert sind, das aus den Wellenleitern (312) austretende Licht entlang einer Vielzahl von Emissionsrichtungen (E) derart zu reflektieren, dass Extraktionsspiegel gebildet werden.

6. Vorrichtung nach einem der vorstehenden Ansprüche, wobei der photonische Chip (30) eine Dicke kleiner oder gleich 300 µm und bevorzugt zwischen 100 Mikrometer und 2 mm umfasst.

7. Herstellungsverfahren einer linsenlosen Infrarotbildgebungsvorrichtung (1) nach einem der vorstehenden Ansprüche, das die folgenden Schritte umfasst:
- Bereitstellen einer Primärlichtquelle (3a)
- Bilden eines photonischen Chips (30), der dazu bestimmt ist, auf der Ebene einer Emissionsfläche (300) das von der Primärquelle (3a) emittierte Licht neu zu emittieren, indem passive Extraktionsstrukturen (311), die von einer ersten Fläche (101) eines ersten Substrats (10a) auf Siliziumbasis vorragen, durch Ätzen des Substrats (10a) gebildet werden, und indem auf der ersten Fläche (101) Wellenleiter (312) gegenüber von den Extraktionsstrukturen (311) gebildet werden, wobei die Wellenleiter (312) dazu konfiguriert sind, das von der Primärlichtquelle (3a) emittierte Licht bis zu den Extraktionsstrukturen (311) zu leiten,
- Bereitstellen eines Sensors (4), der eine Vielzahl von Pixeln (41) umfasst, die dazu geeignet sind, auf einer Erfassungsfläche (400) einen Teil des von der Primärlichtquelle (3a) emittierten Lichts zu erfassen,
- Zusammenfügen des photonischen Chips (30) mit dem Sensor (4) derart, dass die Emissionsfläche und die Erfassungsfläche (300, 400) zu derselben Seite der Vorrichtung (1) gewandt sind,
- Koppeln der Primärlichtquelle (3a) mit den passiven Extraktionsstrukturen (311) des photonischen Chips (30).

8. Herstellungsverfahren nach dem vorstehenden Anspruch, wobei die Wellenleiter (312) direkt auf der ersten Fläche (101) des ersten Substrats (10a) auf Siliziumbasis in mindestens einer Schicht (11, 13) aus einem von dem Silizium unterschiedlichen Material gebildet werden, und wobei die passiven Extraktionsstrukturen (311) in der mindestens einen Schicht (11) gebildet werden.

9. Herstellungsverfahren nach Anspruch 7, wobei die Wellenleiter (312) auf einer ersten Fläche (102) eines zweiten Substrats (10b) gebildet werden und wobei das zweite Substrat (10b) mit dem ersten Substrat (10a) derart zusammengefügt wird, dass die Wellenleiter (312) den Extraktionsstrukturen (311) des ersten Substrats (10a) gegenüberliegen, wobei das Verfahren außerdem eine Verdünnung des zweiten Substrats (10b) ausgehend von einer Fläche (103) umfasst, die der zweiten Fläche (102) entgegengesetzt ist.

10. Herstellungsverfahren nach einem der drei vorstehenden Ansprüche, wobei die passiven Extraktionsstrukturen (311) derart geätzt werden, dass sie jeweils mindestens eine Facette (FE) aufweisen, die um einen Winkel zwischen 30° und 60° in Bezug auf die erste Fläche (101) geneigt ist, und wobei eine metallische Abscheidung (12) auf jeder der mindestens einen Facette (FE) derart erfolgt, dass Extraktionsspiegel gebildet werden.

11. Verwendungsverfahren einer Vorrichtung (1) nach einem der Ansprüche 1 bis 6, wobei die Vorrichtung (1) mit einer abzubilden Zone der Probe (2) in Berührung steht oder ihr derart nahe liegt, dass der Abstand, der die abzubildende Zone und den Sensor (4) trennt, kleiner ist als 200 µm.

## Claims

1. Lens-free infrared imaging device (1) intended to image a sample (2), comprising at least one light source (3, 3a, 3b) configured to emit a light according to several wavelengths of the infrared range, said at least one light source (3, 3a, 3b) having an emission face (300) intended to emit the light in the direction of the sample (2) to be imaged, said device (1) further comprising at least one sensor (4) configured to detect a reflective part of the light emitted having interacted with the sample, said sensor comprising a plurality of pixels (41) and having a detection face (400) intended to receive said reflective part of the light emitted, the emission and detection faces (300, 400) facing one same side of the device (1), said at least one light source (3, 3a, 3b) comprising a primary source (3a) configured to emit light according to several wavelengths of the infrared range, coupled with a secondary source (3b) configured to reemit said light in a plurality of emission directions (E), the emission face (300) being located at the secondary source (3b) and the primary source (3a) being moved outside of an emission zone of the emission face (300), the secondary source (3b) being formed at least partially by a photonic chip (30) comprising a plurality of passive extraction structures (311) disposed on one same plane and coupled with the primary source (3a), the device being **characterised in that** the photonic chip (30) comprises waveguides (312) configured to guide the light emitted by the primary source (3a) to the passive extraction structures (311), the waveguides (312) being disposed on the same plane as the passive extraction structures (311).

2. Device according to the preceding claim, wherein the light source (3, 3a, 3b) and the sensor (4) are stacked on one another.

3. Device according to any one of the preceding claims, wherein the light emitters (31) are arranged in the form of an emission matrix (310) and the pixels (41) of the sensor are arranged in the form of a detection matrix (410), the photonic chip (30) being superposed to the sensor (4) such that the light emitters (31) are alternated with the pixels (41) of the sensor (4), in projection in a stacking direction (z) of the photonic chip (30) and of the sensor (4).

4. Device according to any one of the preceding claims, wherein the photonic chip (30) is superposed to the sensor (4) and the light emitters (31) surround the pixels (41) of the sensor (4), in projection in a stacking direction (z) of the photonic chip (30) and of the sensor (4).

5. Device according to any one of the preceding claims, wherein the passive extraction structures (311) each have at least one facet (F_{E}) inclined by an angle of between 30° and 60° relative to the emission face (300), said facets facing the waveguides (312) and configured to reflect the light exiting the waveguides (312), in the plurality of emission directions (E), so as to form extraction mirrors.

6. Device according to any one of the preceding claims, wherein the photonic chip (30) has a thickness less than or equal to 300 µm, and preferably of between 100 microns and 2 mm.

7. Method for manufacturing a lens-free infrared imaging device (1) according to any one of the preceding claims, comprising the following steps:
- Providing a primary light source (3a),
- Forming the photonic chip (30) intended to reemit, at an emission face (300), the light emitted by the primary source (3a) by forming the passive extraction structures (311) projecting over a first face (101) of a first silicon-based substrate (10a), by etching said substrate (10a), and by forming on said first face (101) of the waveguides (312) facing the extraction structures (311), said waveguides (312) being configured to guide the light emitted by the primary light source (3a) to the extraction structures (311),
- Providing a sensor (4) comprising a plurality of pixels (41) capable of detecting, on a detection face (400), some of the light emitted by the primary light source (3a),
- Assembling the photonic chip (30) to the sensor (4) such that the emission and detection faces (300, 400) face one same side of the device (1),
- Coupling the primary light source (3a) to the passive extraction structures (311) of the photonic chip (30).

8. Manufacturing method according to the preceding claim, wherein the waveguides (312) are formed directly on the first face (101) of the first silicon-based substrate (10a), in at least one layer (11, 13) made of a material different from silicon, and wherein the passive extraction structures (311) are formed in said at least one layer (11).

9. Manufacturing method according to claim 7, wherein the waveguides (312) are formed on a second face (102) of a second substrate (10b), and wherein the second substrate (10b) is assembled to the first substrate (10a), such that the waveguides (312) are facing the extraction structures (311) of the first substrate (10a), the method further comprising a thinning of the second substrate (10b) from a face (103) opposite the second face (102).

10. Manufacturing method according to any one of the three preceding claims, wherein the passive extraction structures (311) are etched so as to each have at least one facet (F_{E}) inclined by an angle of between 30° and 60° relative to the first face (101), and wherein a metal deposition (12) is performed on each of said at least one facet (F_{E}), so as to form extraction mirrors.

11. Method for using a device (1) according to any one of claims 1 to 6, wherein the device (1) is in contact with or in the immediate proximity of a zone to be imaged of the sample (2), such that the distance separating said zone to be imaged and the sensor (4) is less than 200 µm.
